# EUROPÄISCHE PATENTSCHRIFT

(11) **EP 0 579 637 B1**
(45) Veröffentlichungstag und Bekanntmachung des Hinweises auf die Patenterteilung: **08.11.1995**
(21) Anmeldenummer: 92907485.4
(22) Anmeldetag: 30.03.1992
(51) Int. Cl.: A21C 1/06

(54) **VERFAHREN UND VORRICHTUNG ZUM KONTINUIERLICHEN EINMISCHEN VON FLÜSSIGEN UND/ODER RIESELFÄHIGEN STOFFEN IN NAHRUNGSMITTELMASSEN**
PROCESS AND DEVICE FOR CONTINUOUSLY MIXING-IN LIQUID AND/OR POURABLE SUBSTANCES INTO MASSES OF FOODSTUFFS
PROCEDE ET DISPOSITIF DE MELANGE EN CONTINU DE SUBSTANCES LIQUIDES ET/OU DANS DES MASSES DE PRODUITS ALIMENTAIRES

(30) Priorität: 29.03.1991 DE 4110416
(43) Veröffentlichungstag der Anmeldung: 26.01.1994
(73) Patentinhaber: ISMAR MASCHINEN GMBH, 50668 Köln (DE)
(72) Erfinder: ZEHLE, Gunter, D-1505 Bergholz-Rehbrücke (DE); JUHNKE, Hubert, D-1597 Potsdam (DE); ISMAR, Thomas, Theodor, D-5000 Köln 1 (DE)
(74) Vertreter: Cohausz & Florack Patentanwälte
(86) Internationale Anmeldenummer: EP9200705
(87) Internationale Veröffentlichungsnummer: WO9217068

(56) Entgegenhaltungen:
- DE-A- 1 917 435
- DE-B- 1 180 349
- DE-C- 401 033
- DE-C- 855 017
- DE-C- 939 475
- FR-A- 584 306
- FR-A- 2 618 643

## Beschreibung

Die Erfindung betrifft ein Verfahren zum kontinuierlichen Einmischen, insbesondere zum Einmischen von flüssigen, stückigen oder rieselfähigen Substanzen in Nahrungsmittelgrundmassen, wie Schäume oder Teige. Die Erfindung betrifft ferner eine zu diesem Zweck geeignete Vorrichtung. Das klumpenfreie und gleichmäßige Einmischen von rieselfähigen oder stückigen Substanzen in schaumige oder teigige Grundmassen wird als "Melieren" bezeichnet.

Eine Vorrichtung zum Mischen von Flüssigkeiten und rieselfähigen Stoffen ist aus der deutschen Patentschrift DE-PS- 21 13 960 bekannt. Bei dieser Vorrichtung ist die Welle als eine einzige Hohlwelle ausgebildet und weist Verteilerrohre auf, über die in den Hohlraum der Hohlwelle geförderte Flüssigkeit zu den trocknen Stoffen im Mischraum der Vorrichtung hinzugemischt werden. Eine weitere Vorrichtung ist aus der DE-PS- 96 36 88 bekannt.

Bei dieser Vorrichtung ist die Welle in mehrere Mischstrecken unterteilt, die sich durch unterschiedlich dicht angeordnete Mischelemente unterscheiden. Die zu mischenden Stoffe können am Anfang dieser Bereiche über Einfüllöffnungen in den Mischbehälter der Vorrichtung eingefüllt werden. Zur Verbesserung des Mischergebnisses sind bei dieser Vorrichtung zusätzlich als Stator ausgebildete Gegenelemete zu den Mischelementen fest an der Innenwand des Mischbehälters befestigt.

Die bekannten Vorrichtungen haben den Vorzug, daß sich mit ihnen in kurzer Zeit homogene Stoffgemische aus flüssigen und trockenen Stoffen herstellen lassen. Dies ist aber nur auf Kosten einer starken mechanischen Beanspruchung der vermischten Stoffe möglich. So führen die im Mischbehälter beim Mischen erzeugten hohen Drücke und die dadurch verursachten Scherkräfte zu einer Zerkleinerung der trockenen Stoffe und zur Zerstörung der Struktur der Flüssigkeiten. Darüber hinaus werden die Stoffe während des Mischens durch den hohen Energieeinsatz erwärmt, wodurch eine weitere unerwünschte Eigenschaftsänderung des Stoffgemisches verursacht werden kann. Darüber hinaus ist es beim Mischen von verschiedenen Stoffen in diesen Vorrichtungen nicht möglich, unterschiedliche Durchmischungsgrade für die einzelnen Stoffe zu erzielen.

Aus der US-A-3064908 ist eine Mischvorrichtung bekannt, die zum Suspendieren von Zellulose oder Pulpepartikeln in einer Trägerflüssigkeit dient. Bei dieser Vorrichtung sind gegenläufig zueinander rotierende spiralförmige Wendeln vorgesehen, mittels denen die Suspension gegen eine Gehäusewand gepreßt wird, so daß aufgrund des erzeugten Preßdruckes Flüssigkeit aus einer unterhalb der Wendelanordnung vorgesehenen Austragsklappe abgenommen werden kann.

Aus der FR-A-2618643 ist eine Mischvorrichtung in Form einer Doppelschneckenpresse bekannt, bei der die Zutaten an entlang der Mischstrecke axial versetzten Einfüllstellen zugeführt werden. Auch bei dieser Vorrichtung wirkt ein hoher Preßdruck auf das Mischgut, so daß eine starke mechanische Belastung des Mischgutes erfolgt.

Aus der DE-PS 401033 ist eine Misch- bzw. Förderschnecke bekannt, die zum Mischen von feinkörnigem Material dient. Hierbei sind bandförmige Schrauben vorgesehen, so daß das Material von der einen bandförmigen Schraube in den Drehkreis der anderen geworfen wird und unter inniger Vermischung stückweise vorgeschoben wird. Eine solche Vorrichtung ist zur Verarbeitung von Schäumen oder Teigen ungeeignet, weil im Überlappungsbereich der Schrauben nur stückige Stoffe angehoben werden können, nichtstückige Stoffe jedoch am Vermischungsprozeß nicht teilnehmen.

Daher sind die Vorrichtungen der eingangs genannten Art ungeeignet zur Herstellung von Stoffgemischen, bei denen die Struktur und Form der Ausgangsstoffe erhalten bleiben solle. Dies gilt insbesondere bei der Herstellung von Backteigen, bei der flüssige Schäume, z.B. Eischäume, mit Mehl oder Stärke meliert und mit weiteren Zutaten, wie z.B. Früchten, Kakao etc., vermischt werden. Der starke Druckaufbau beim Mischen in herkömmlichen Vorrichtungen führt zu einer Verdichtung de Schäume und zur Zerstörung der festen Zutaten, wodurch eine unerwünscht zähe Teigmasse entsteht. Darüber hinaus können Eischäume aufgrund der Wärmezufuhr gerinnen, wodurch der fertig gemischte Backteig unbrauchbar wird.

Aufgabe der Erfindung ist es, ein Verfahren anzugeben und eine Vorrichtung zu schaffen, derart, daß bei geringem Energiebedarf mit einfachen konstruktiven Mitteln ein Durchmischen von flüssigen und trockenen Stoffen erlaubt ist, bei dem die Strukturen und Formen der Stoffe weitgehend erhalten bleiben.

Diese Aufgabe wird verfahrensgemäß durch die Merkmale des Anspruchs 1 gelöst.

Indem die Stoffe in einem Mischbehälter gemischt werden, in dem kein Druck aufgebaut wird, wird das unerwünschte Verdichten der Stoffe oder der Nahrungsmittelgrundmassen sicher vermieden. Durch die Verwendung der mindestens zwei gegenläufig rotierenden Wendeln, ist es darüber hinaus möglich, bei geringem Energieeinsatz einen hohen Volumendurchsatz beim Mischen zu erzielen, ohne daß zusätzliche, aufwendige Fördermittel eingesetzt werden müssen. Gleichzeitig wird durch den Einsatz der "Förderwendel" ein zwar inniges aber gleichwohl schonendes Einmischen erreicht, da die zugegebenen Stoffe in die Nahrungsmittelgrundmasse quasi "untergehoben" werden, ohne selbst zerstört oder verändert zu werden. Das erfindungsgemäße Verfahren ermöglicht es darüber hinaus auf einfache Weise, den Abstand der Wendeln so zu wählen, daß ein unerwünscht hoher Druckaufbau in dem Mischgut sicher verhindert wird.

Indem nach einer bevorzugten Ausgestaltung der Erfindung der Ort der Einfüllstelle einer Substanz gegenüber der Einfüllstelle einer anderen Substanz verändert wird, kann auf einfache Weise ein unterschiedlicher Durchmischgrad für verschiedene Substanzen erzielt werden.

Eine besonders schonende, strukturerhaltene Durchmischung kann dadurch erzielt werden, daß in einem ersten Abschnitt der Mischstrecke die Ausgangsstoffe vorgemischt und in mindestens einem nachfolgenden Abschnitt die weiteren Substanzen hinzu gemischt werden. Da die Ausgangsstoffe schon vorgemischt mit den weiteren Substanzen vermischt werden, läßt sich ohne zusätzliche Beanspruchung der später zugefügten Stoffe in kurzer Zeit ein homogenes Stoffgemisch erzeugen. Die Einteilung der Mischstrecke in unterschiedliche Abschnitte hat darüber hinaus den Vorteil, daß die Stoffe in einem letzten Bereich der Mischstrecke unter Druckaufbau gegenüber dem Mischbehälter geknetet werden können. Dies ist besonders dann günstig, wenn zähe Massen, z.B. Brotteig, erzeugt werden sollen.

Vorrichtungsmäßig wird die Aufgabe durch die Merkmale des Anspruchs 4 gelöst.

Hierdurch ergibt sich eine besonders schonende Durchmischung der Stoffe. Darüber hinaus sind Förderwendel einfach und kostengünstig herzustellen, da auf zusätzliche Mischelemente verzichtet werden kann. Die Förderwirkung der Förderwendel wird dadurch unterstützt, daß die Wendelgänge jeweils benachbarter Förderwendel aufgrund ihrer Neigung in Förderrichtung eine entgegengesetzte Steigung aufweisen. Dabei kann durch die Wahl der Steigung der Wendelgänge die Förderwirkung der Förderwendel bestimmt werden.

Durch die Gestaltung des Mischbehälters wird ein Druckaufbau in seinem Inneren sicher vermieden, da etwa in dem Mischbehälter eingeschlosse Luft oder überschüssiges Mischgut aus dem Mischbehälter entweichen kann. Durch die gleiche Förderrichtung der Wellen wird das Mischgut von der Einfüllstelle zur Ausgangsstelle ohne zusätzliche Fördereinrichtungen gefördert. Dabei wird durch die gegenläufig rotierenden Wendeln eine gute, gleichmäßige Durchmischung der Stoffe erzielt.

Bevorzugte konstruktive Ausgestaltungen der Erfindung sind darin zu sehen, daß der Überlappungsgrad der Wendeldurchmesser mindestens 20 % beträgt, daß das Verhältnis aus Wendeldurchmesser und Wendelsteigung im Bereich von 1,0 bis 2,0, vorzugsweise bei 1,43, liegt, daß das Verhältnis aus Wendeldurchmesser und Innendurchmesser des Mischbehälters im Bereich von 0,1 bis 0,8, vorzugsweise bei 0,55, liegt.

Beim Mischen von unterschiedlichen Stoffen kann vorzugsweise der Grad der Durchmischung dadurch gesteuert werden, daß die Stoffe an unterschiedlichen Stellen in den Mischbehälter eingefüllt werden, deren Position übernahezu die gesamte Länge der Welle in dem Mischbehälter veränderbar ist. Dies wird dadurch ermöglicht, daß die Einfüllstelle axial entlang der Mischstrecke verfahrbar ist.

Ein besonders gleichmäßiges Mischergebnis läßt sich dadurch erzielen, daß die spiralförmigen Wendeln jeweils von einer angetriebenen Welle getragen sind, wobei die Wellen benachbarter Wendeln achsparallel zueinander angeordnet sind. Auf diese Weise ist zudem der Durchmischungsgrad der einzelnen Stoffe besonders leicht zu steuern, weil sich durch die achsparallele Anordnung der Förderwendel eine gleichmäßige Fördergeschwindigkeit einstellt. Dabei läßt sich die Mischwirkung der Wendel noch dadurch verbessern, daß die Wendelgänge der Förderwendel durch radial zu der Achse der Förderwendel oder Wellen um einen Winkelbetrag versetzte Stäbe mit einer in der Längsachse der Förderwendel angeordneten zentralen Achse verbunden sind.

Sollen Stoffe von unterschiedlicher Festigkeit und Stabilität oder Struktur vermischt werden, so ist es besonders vorteilhaft, wenn die Förderwendel axial jeweils in unterschiedliche Mischstrecken bildende Abschnitte unterteilt sind. So ist es möglich, Stoffe, die eine innige Verbindung unter Energiezufuhr eingehen sollen, anschließend mit weiteren Stoffen zu vermischen, die empfindlich gegen starke mechanische Belastungen sind.

Sollen trockene Stoffe vorgemischt werden, so ist es sinnvoll, daß die Förderwendel im ersten Abschnitt der Mischstrecke mit senkrecht zur Achse der Förderwendel ausgerichteten flächigen Mischelementen zum Mischen von trockenen Stoffen versehen sind. Als Mischelemente sind hierzu besondere sogenannte "Paddel" geeignet.

Ein Austreten von überschüssigem Mischgut kann dadurch verhindert werden, daß der Mischbehälter wannenförmig ist. Sind die Kanten zwischen Wellenseitenwänden und dem Boden des wannenförmigen Mischbehälters abgerundet, so wird zusätzlich die rotierende Mischbewegung des Mischgutes unterstützt. Dabei ist es besonders vorteilhaft, wenn die Ecken zwischen den seitlichen Wänden und dem Boden auf der Innenseite des Mischbehälters abgerundet sind. Durch die abgerundeten Kanten wird eine besonders gleichmäßige Mischbewegung in dem Mischgut erzeugt. Diese gleichmäßige Mischbewegung kann noch dadurch unterstützt werden, daß in dem Überschnittbereich auf dem Boden des Mischbehälters sich koaxial zu den Förderwendeln erstreckender Steg mittig befestigt ist, dessen freie Kanten der äußeren Kontur der Förderwendel angepaßt sind. Ein besonders günstiges Mischverhalten ergibt sich, wenn der Radius der abgerundeten Ecken und der Radius der Kontur des Steges gleich dem halben Durchmesser der Förderwendel ist. Auf diese Weise ist sichergestellt, daß das Mischgut in ständiger, gleichmäßiger Bewegung gehalten wird.

Die Vorrichtung kann zusätzlich dadurch vereinfacht werden, daß die Ausgangsstelle als Öffnung im Boden des Mischbehälters ausgebildet ist, da auf diese Weise sowohl die Schwerkraft als auch die Förderbewegung des Mischgutes zum Befüllen eines Entnahmebehälters genutzt werden kann. Dabei kann die Befüllung eines Entnahmebehälters noch dadurch erleichtert werden, daß die seitliche schmale Wand im Bereich der Ausgangsstelle als Gleitfläche für die durchmischten Stoffe angeschrägt ist. Durch die angeschrägte, seitliche Wand am Ende des Mischweges wird Bewegungsrichtung des Mischgutes zu der Ausgangsstelle hin umgelenkt. Genauso ist es günstig, wenn die seitliche schmale Wand des Mischbehälters im Bereich der Einfüllstelle als Gleitfläche für die Stoffe angeschrägt ist.

Eine konstruktiv besonders einfache und in den Herstellkosten besonders günstige Vorrichtung ergibt sich, wenn die Förderwendel durch einen gemeinsamen Antrieb bewegt sind. Dabei ist die erfindungsgemäße Vorrichtung besonders als Mischer zur Herstellung von Backteigen oder von Eierschäumen geeignet, denen Mehl, Stärke oder auch stückige Substanzen, z.B. Kirschen, zugegeben werden sollen.

Eine weitere Ausgestaltung der Erfindung sieht vor, daß die Zudosierung sowohl der flüssigen, rieselfähigen oder stückigen Substanzen als auch der Nahrungsmittelgrundmassen über ein kombiniert volumentrisch/gravimetisches Dosiersystem erfolgt.

Im folgenden soll die Erfindung anhand von ein Ausführungsbeispiel zeigenden Zeichnungen näher erläutert werden.

Es zeigen:

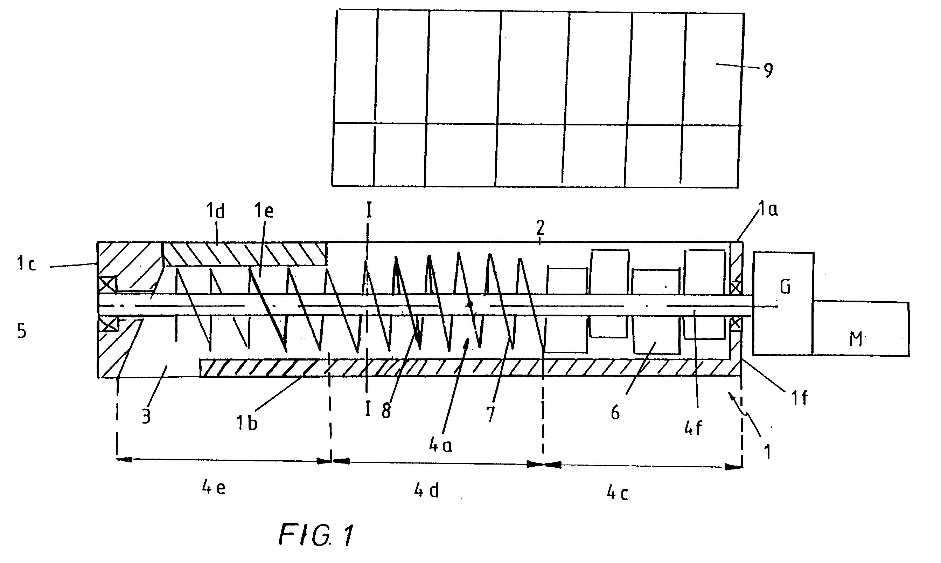

- Fig. 1: einen Längsschnitt durch die Vorrichtung;

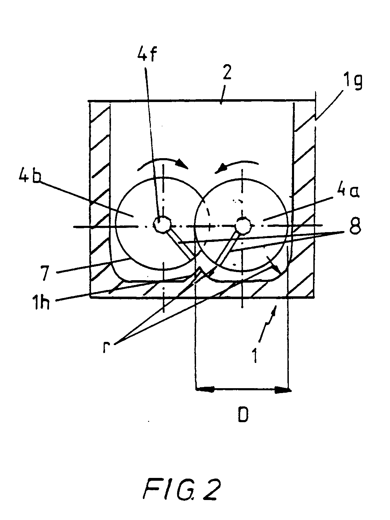

- Fig. 2: einen Schnitt entlang der Linie I-I nach Figur 1;

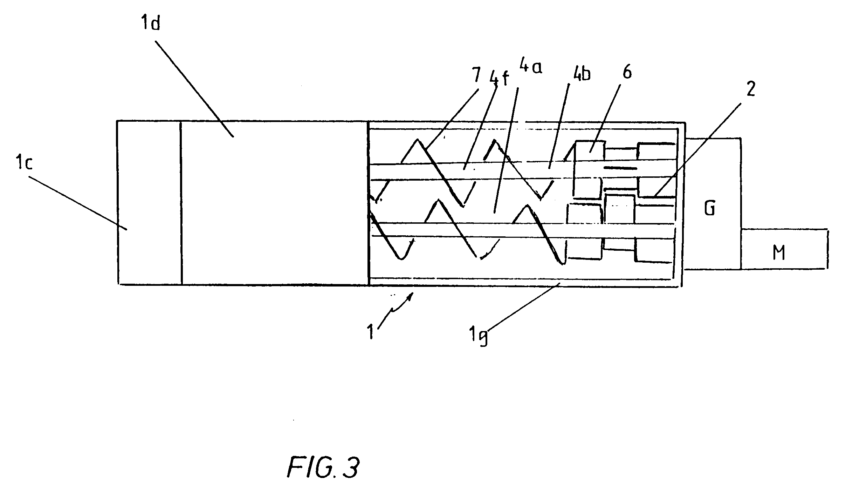

- Fig. 3: einen Aufsicht auf die Vorrichtung nach Figur 1.

Die Vorrichtung zur Herstellung von Backteigen weist eine wannenförmigen Mischbehälter 1 auf, an dessen Oberseite 1 eine Einfüllöffnung 2, die sich über nahezu die gesamte Länge des Mischbehälters 1 erstreckt, ausgebildet ist. Im Boden 1b des Mischbehälters 1 ist versetzt zu der Einfüllöffnung 2 eine Öffnung als Austragsstelle 3 eingelassen. An die Austragsstelle 3 grenzt eine Rückwand des Behälters. Diese Rückwand 1c ist so angeschrägt, daß sie im Bereich der Ausgangsstelle 3 schmal ist und zur Oberseite 1a des Mischbehälters 1 eine zunehmende Dicke aufweist. Die Rückseite 1c endet an der Oberseite 1a in einer Abschlußplatte 1d, die an die Einfüllöffnung 2 angrenzt. Zwischen der Abschlußplatte 1d und dem Boden 1b ist ein Knetkanal 1e eingeschlossen. Der Rückseite 1c gegenüber liegt eine Stirnseite 1f, die stirnseitig die Einfüllöffnung 2 begrenzt.

In dem Mischbehälter 1 sind parallel zu dem Boden 1b und achsparallel zueinander Förderwendel 4a, 4b angeordnet, die in Lagern 5 in der Stirnseite 1f und Rückseite 1c des Mischbehälters 1 gelagert sind. Die seitlichen Wände 1g gehen auf der Innenseite des Mischbehälters 1 in einer Rundung in den Boden 1b über, deren Radius r gleich dem halben Druchmesser D der Förderwendel 4a,4b ist. Mittig zwischen den Förderwendeln 4a,4b ist auf dem Boden 1b ein Steg 1h ausgebildet, dessen freie Kanten ebenfalls im Radius r abgerundet sind.

Die Förderwendel 4a,4b sind in drei Mischstreckenabschnitte 4c,4d,4 unterteilt. Der erste Mischstreckenabschnitt 4c erstreckt sich von der Stirnseite bis etwa zur Hälfte der Breite der Einfüllöffnung 2. Über diesen Mischstreckenabschnitt 4c sind die Förderwendel 4a,4b mit Mischelementen 6 besetzt, die sich flächig entlang de Achse 4f der Förderwendel 4a,4b erstrecken und als Paddel ausgeführt sind.

Über die zweite und dritte Mischstrecke weisen die Förderwendel 4a,4b Wendelgänge 7 auf, die sich mit Abstand um eine zentrale Achse 4f winden und die jeweils in Förderrichtung geneigt sind. Die Wendelgänge 7 sind durch senkrecht zu der zentralen Achse 4f ausgerichtete Stäbe 8, mit der zentralen Achse 4f der Förderwendel 4a,4b verbunden. Der dritte Mischstreckenabschnitt, erstreckt sich in dem durch die Oberseite 1d und den Boden 1b eingeschlossenen Kanal 1e.

Oberhalb der Oberseite 1a erstrecken sich über die Breite der Einfüllöffnung 2 Einfüllstellen 9. Die Förderwendel 4a,4b werden von einem Motor M angetrieben und über ein Getriebe G in gegenläufige Drehbewegung versetzt.

Trockene Backzutaten werden über die Einfüllstellen 9 im Bereich der ersten Mischstrecke 4c in den Mischbehälter 1 eingefüllt und durch die Mischelemente 6 vermischt. Dabei werden sie aus der ersten Mischstrecke 4c zu der zweiten Mischstrecke 4d gefördert. Im Bereich der zweiten Mischstrecke 4d werden die flüssigen Zutaten, wie Eischaum über die Einfüllstellen 9 in den Mischbehälter gegeben. Dort werden sie mit den vorgemischten trockenen Backzutaten vermischt und gleichzeitig zu der dritten, als Knetstrecke ausgebildeten Mischstrecke 4e gefördert. Während des Mischens in der ersten und zweiten Mischstrecke 4c,4d kommt es aufgrund der offenen Einfüllöffnung 2 zu keinem Druckaufbau im Mischgut gegenüber dem Gehäuse. Erst wenn Mischgut in den Kanal 1e gefördert ist, steigt der Druck in dem Mischgut an und das Mischgut wird zu einer homogenen Teigmasse geknetet, bis es schließlich die Ausgangsstelle erreicht und entlang der angeschrägten Rückseite 1c des Mischbehälters 1 aus dem Mischbehälter in einen nicht gezeigten Entnahmebehälter gefördert wird.

Soll die erfindungsgemäße Vorrichtung nur als Mischer verwendet werden, in dem das Mischgut ohne Druckaufbau vermischt wird, so kann dazu die Abschlußplatte 1d entfernt werden, so daß auch in dem letzten Mischbereich jeder Druckaufbau gegenüber dem Mischbehälter 1 der Vorrichtung vermieden wird. Wenn auf eine Vormischung der trockenen Zutaten verzichtet werden soll, so können auch im Bereich der ersten Meßstrecke 4c Wendelgänge an Stelle der Mischelemente 6 an den Förderwendeln 4a,4b ausgebildet sein.

Die Dosierung sowohl der Zutaten als auch der Nahrungsmittelgrundmassen erfolgt durch ein kombiniert volumetrisch/gravimetrisches Dosiersystem. Dazu ist jeder Speicherbehälter für die jeweilige Zutat mit einer Dosierpumpe verbunden, deren Drehzahl von einem Regelkreis gesteuert wird. Die Dosierpumpe speist jeweils eine Einfüllstelle 9 an der Oberseite der Einfüllöffnung 2. Der Regelkreis erhält als Eingangsgröße (Sollwert) ein Signal, welches von einer Waage abgeleitet wird, auf der der jeweilige Speicherbehälter ruht.

Je nach der von der Waage (gravimetrisch) festgestellten tatsächlichen Entnahmemenge aus dem Speicherbehälter wird die Drehzahl so verändert, daß die (volumentrische) Fördermenge konstant ist, die aus dem Speicherbehälter in die Einfüllstellen 9 geleitet wird.

Wird von der Waage ein Erreichen des Mindestfüllstandes im Speicherbehälter festgestellt, wird die zuletzt aktuelle Pumpendrehzahl beibehalten, bis der Speicherbehälter wieder befüllt ist. Die Füllung des Speicherbehälters erfolgt über ein separates Zudosiersystem und wird beendet, wenn die Waage ein Erreichen des maximalen Füllstandes konstatiert.

## Patentansprüche

1. Verfahren zum kontinuierlichen Einmischen von flüssigen, rieselfähigen oder stückigen Substanzen in Nahrungsmittelgrundmassen, insbesondere in Schäume oder Teige,
wobei die Substanz in einen die Nahrungsmittelgrundmasse aufnehmenden, oberseitig offenen Mischbehälter (1) eingeleitet wird und daß das Mischgut mittels mindestens zweier gegenläufig rotierender spiralförmiger Wendeln (4a,4b), deren Querschnitt kreisrund oder oval ist und deren Durchmesser sich teilweise überlappen, horizontal in axialer Richtung entlang einer Mischstrecke (4d) drucklos gefördert wird.

2. Verfahren nach Anspruch 1,
**dadurch gekennzeichnet**, daß unterschiedliche Substanzen an unterschiedlichen axialen Orten der Mischstrecke eingeleitet werden.

3. Verfahren nach Anspruch 1 oder 2,
**dadurch gekennzeichnet**, daß in einem ersten Abschnitt der Mischstrecke (4c) die Nahrungsmittelgrundmasse vorgemischt und in mindestens einem nachfolgenden Abschnitt (4d) die Substanz hinzugemischt wird.

4. Vorrichtung zum kontinuierlichen Einmischen von flüssigen, rieselfähigen oder stückigen Substanzen in Nahrungsmittelgrundmassen, insbesondere in Schäume oder Teige, mit einem länglichen, oberseitig offenen Mischbehälter (1), innerhalb dessen mindestens zwei horizontale, gegenläufig rotierende spiralförmige Wendeln (4a,4b) mit kreisrundem oder ovalem Querschnitt angeordnet sind, deren Durchmesser sich berührungsfrei teilweise überlappen und deren Wendelgänge jeweils in Förderrichtung des Mischgutes geneigt sind, sowie einer Einfüllstelle (9) und einer Austragsstelle (3), zwischen denen eine Mischstrecke (4d) gebildet ist, entlang der die Substanz drucklos in die Nahrungsmittelgrundmasse einmischbar ist.

5. Vorrichtung nach Anspruch 4,
**dadurch gekennzeichnet**, daß der Überlappungsgrad der Wendeldurchmesser mindestens 20% beträgt.

6. Vorrichtung nach Anspruch 4 oder 5,
**dadurch gekennzeichnet**, daß das Verhältnis aus Wendeldurchmesser und Wendelsteigung im Bereich von 1,0 bis 2,0 vorzugsweise bei 1,43, liegt.

7. Vorrichtung nach einem der Ansprüche 4 bis 6,
**dadurch gekennzeichnet**, daß das Verhältnis aus Wendeldurchmesser und Innendurchmesser des Mischbehälters im Bereich von 0,1 bis 0,8, vorzugsweise bei 0,55, liegt.

8. Vorrichtung nach einem der Ansprüche 4 bis 7,
**dadurch gekennzeichnet**, daß die Einfüllstelle (9) axial entlang der Mischstrecke verfahrbar ist.

9. Vorrichtung nach einem der Ansprüche 4 bis 8,
**dadurch gekennzeichnet**, daß die spiralförmigen Wendeln (4a,4b) jeweils von einer angetriebenen Welle getragen sind, wobei die Wellen benachbarter Wendeln achsparallel zueinander angeordnet sind.

10. Vorrichtung nach einem der Ansprüche 4 bis 9,
**dadurch gekennzeichnet**, daß die Förderwendel (4a,4b) axial jeweils in unterschiedliche Mischstrecken (4c,4d,4e) bildende Abschnitte unterteilt sind.

11. Vorrichtung nach einem der Ansprüche 4 bis 10,
**dadurch gekennzeichnet**, daß in dem Überschnittbereich auf dem Boden (1b) des Mischbehälters ein sich koaxial zu den Förderwendeln erstreckender Steg (1h) mittig ausgebildet ist, dessen freie Kanten der äußeren Kontur der Förderwendeln (4a,4b) angepaßt sind.

12. Vorrichtung nach einem der Ansprüche 4 bis 11,
**dadurch gekennzeichnet**, daß die Zudosierung sowohl der flüssigen, rieselfähigen oder stückigen Substanzen als auch der Nahrungsmittelgrundmassen über ein kombiniert volumetrisch/gravimetrisches Dosiersystem erfolgt.

13. Verwendung der Vorrichtung nach einem der Ansprüche 4 bis 12 zur Feinverteilung von Mehl oder Stärke in Eischäumen.

14. Verwendung der Vorrichtung nach einem der Ansprüche 4 - 13 zum Einmengen von Mehl in Sauerteige oder Dünnteige.

15. Verwendung der Vorrichtung nach einem der Ansprüche 4 bis 14 zum Einbringen von stückigen Substanzen, beispielsweise Kirschen, in Eischäume, Biskuit oder Eismassen.

## Claims

1. A method for continuously mixing in liquid, pourable or lumpy substances into basic masses of foodstuffs, in particular foams or doughs, wherein the substance is introduced into a mixing container (1) which is open on the upper side and receives the basic masses of foodstuffs and the material to be mixed is conveyed without pressure horizontally in the axial direction along a mixing segment (4d) by means of at least two oppositely rotating helically shaped spirals (4a, 4b) whose cross sections are circular or oval and whose diameters partly overlap one another.

2. A method as claimed in claim 1, characterized in that different substances are introduced at different axial positions of the mixing segment.

3. A method as claimed in claim 1 or 2, characterized in that the basic masses of foodstuffs are premixed in a first section of the mixing segment (4c) and the substance is mixed in in at least one subsequent section (4d).

4. An apparatus for continuously mixing in liquid, pourable or lumpy substances into basic masses of foodstuffs, in particular foams or doughs, with an oblong, upwardly open mixing container (1) in which at least two horizontal oppositely rotating helical-shaped spirals (4a, 4b) with circular or oval cross sections are arranged, whose cross sections partly overlap one another without contact and whose spiral segments are inclined towards the conveying direction of the material to be mixed and with a filling position (9) and a discharge position (3) between which a mixing segment (4d) is formed along which the substance can be mixed without pressure into the basic masses of foodstuffs.

5. An apparatus as claimed in claim 4, characterized in that the degree of overlapping of the spiral diameter is at least 20 %.

6. An apparatus as claimed in claim 4 or 5, characterized in that the ratio of spiral diameter and spiral pitch is in the range of 1.0 to 2.0, preferably at 1.43.

7. An apparatus as claimed in one of the claims 4 to 6, characterized in that the ratio of spiral diameter and inner diameter of the mixing container is in the range of 0.1 to 0.8, preferably at 0.55.

8. An apparatus as claimed in one of the claims 4 to 7, characterized in that the filling position (9) is axially movable along the mixing segment.

9. An apparatus as claimed in one of the claims 4 to 8, characterized in that the helical-shaped spirals (4a, 4b) are carried by a driven shaft, with the shafts of adjacent spirals being arranged axially parallel with respect to one another.

10. An apparatus as claimed in one of the claims 4 to 9, characterized in that the conveying spirals (4a,4b) are axially subdivided into sections forming different mixing segments (4c, 4d, 4e).

11. An apparatus as claimed in one of the claims 4 to 10, characterized in that a bridge (1h) extending coaxially to the conveying spirals is arranged in the centre and in the intersecting region on the floor (1b) of the mixing container, the free edges of said bridge being adapted to the exterior shape of the conveying spirals (4a, 4b).

12. An apparatus as claimed in one of the claims 4 to 11, characterized in that the dosaged addition both of the liquid, pourable or lumpy substances as well as the basic masses of foodstuffs is made via a combined volumetric/gravimetric dosaging system.

13. The application of the apparatus as claimed in one of the claims 4 to 12 for fine distribution of flour or starch in egg foams.

14. The application of the apparatus as claimed in one of the claims 4 to 13 for mixing in flour in sourdoughs or thin doughs.

15. The application of the apparatus as claimed in one of the claims 4 to 14 for introducing lumpy substances such as cherries in egg foams, biscuits or masses of ice.

## Revendications

1. Procédé de mélange en continu de substances liquides, coulantes ou en morceaux dans des masses de produits alimentaires, notamment dans des mousses ou des pâtes, la substance étant introduite dans un récipient de mélange (1) recevant les masses de produits alimentaires et ouvert en haut et le mélange étant transporté sans pression horizontalement dans un sens axial le long d'une section de mélange (4d) au moyen d'au moins deux hélices spiroïdales et contrarotatives (4a, 4b) dont la section transversale est circulaire ou ovale et dont les diamètres se chevauchent partiellement.

2. Procédé selon la revendication 1,
**caractérisé en ce que**
des substances différentes sont introduites à des points axiaux différents de la section de mélange.

3. Procédé selon la revendication 1 ou 2,
**caractérisé en ce que**
la masse de produits alimentaires est prémélangée dans une première portion de la section de mélange (4c) et que la substance est ajoutée dans au moins une portion suivante (4d).

4. Dispositif de mélange en continu de substances liquides, coulantes ou en morceaux dans des masses de produits alimentaires, notamment dans des mousses ou des pâtes, avec un récipient de mélange (1) oblong et ouvert en haut à l'intérieur duquel se trouvent au moins deux hélices (4a, 4b) spiroïdales horizontales et contrarotatives dont les diamètres se chevauchent partiellement sans contact et dont les spires d'hélice sont penchées dans le sens du transport du mélange et avec un point de remplissage (9) et un point d'évacuation (3) entre lesquels est formée une section de mélange (4d) le long de laquelle la substance peut être mélangée sans pression à la masse de produits alimentaires.

5. Dispositif selon la revendication 4
**caractérisé en ce que**
le degré de chevauchement des diamètres des hélices est égal à au moins 20%.

6. Dispositif selon la revendication 4 ou 5
**caractérisé en ce que**
le rapport entre le diamètre et le pas d'hélice est égal à une valeur située dans une fourchette de 1,0 à 2,0, de préférence 1,43.

7. Dispositif selon l'une des revendications 4 à 6
**caractérisé en ce que**
le rapport entre le diamètre d'hélice et le diamètre intérieur du récipient de mélange est égal à une valeur située dans une fourchette de 0,1 à 0,8, de préférence 0,55.

8. Dispositif selon l'une des revendications 4 à 7
**caractérisé en ce que**
le point de remplissage (9) est déplaçable axialement le long de la section de mélange.

9. Dispositif selon l'une des revendications 4 à 8
**caractérisé en ce que**
les hélices spiroïdales (4a, 4b) sont chacune soutenues par une broche entraînée, les broches des hélices voisines étant placées parallèlement à l'axe les unes par rapport aux autres.

10. Dispositif selon l'une des revendications 4 à 9
**caractérisé en ce que**
les hélices de transport (4a, 4b) sont chacune divisées axialement en portions formant des sections de mélange (4c, 4d, 4e) différentes.

11. Dispositif selon l'une des revendications 4 à 10
**caractérisé en ce qu'**
une barrette (1h) s'étendant coaxialement aux hélices de transport est formée de manière centrique sur le fond (1b) du récipient de mélange dans la zone de chevauchement, les bords libres de cette barrette étant adaptés au contour extérieur des hélices de transport (4a, 4b).

12. Dispositif selon l'une des revendications 4 à 11
**caractérisé en ce qu'**
aussi bien le dosage des substances liquides, coulantes ou en morceaux que celui des masses de produits alimentaires s'effectue au moyen d'un système de dosage volumétrique/gravimétrique combiné.

13. Utilisation du dispositif selon l'une des revendications 4 à 12 pour une dispersion fine de farine ou d'amidon dans des mousses d'oeufs.

14. Utilisation du dispositif selon l'une des revendications 4 à 13 pour le mélange de farine dans des levains ou des pâtes légères.

15. Utilisation du dispositif selon l'une des revendications 4 à 14 pour l'introduction de substances en morceaux, par exemple des cerises, dans des mousses d'oeufs, de la pâte de biscuit ou des crèmes glacées.
